(19) Europäisches Patentamt / European Patent Office / Office européen des brevets

(11) **EP 4 510 745 A1**

(12) **EUROPEAN PATENT APPLICATION**
published in accordance with Art. 153(4) EPC

(43) Date of publication:
**19.02.2025 Bulletin 2025/08**

(21) Application number: **23790976.7**

(22) Date of filing: **22.03.2023**

(51) International Patent Classification (IPC):
**H04W 72/12** (2023.01)

(52) Cooperative Patent Classification (CPC):
**H04W 28/02; H04W 28/086; H04W 72/12;
H04W 72/50; H04W 72/52**

(86) International application number:
**PCT/CN2023/083154**

(87) International publication number:
**WO 2023/202315 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2022 CN 202210423128**

(71) Applicant: **ZTE Corporation
Shenzhen, Guangdong 518057 (CN)**

(72) Inventors:
• **YANG, Jun
Shenzhen, Guangdong 518057 (CN)**

• **CHEN, Yijian
Shenzhen, Guangdong 518057 (CN)**
• **DOU, Jianwu
Shenzhen, Guangdong 518057 (CN)**
• **WANG, Yuxin
Shenzhen, Guangdong 518057 (CN)**
• **LI, Yong
Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **BASE STATION SCHEDULING METHOD AND APPARATUS, SYSTEM, DEVICE, MEDIUM, AND PRODUCT**

(57) Embodiments of the present application provide a base station scheduling method, a scheduling apparatus, a communication base station, a scheduling system, a scheduling device, a computer-readable storage medium, and a computer program product. A scheduling instruction is obtained by analyzing base station information in an area, then a base station performs autonomous migration according to the scheduling instruction.

FIG. 2

EP 4 510 745 A1

**Description**

**CROSS-REFERENCE TO RELATED APPLICATION**

This application is based on and claims the priority of Chinese patent application No. 202210423128.3 filed on April 21, 2022, the disclosure of which is incorporated herein by reference in its entirety.

**TECHNICAL FIELD**

Embodiments of the present disclosure relate to the field of communications technologies, in particular to a method for base station (BS) scheduling, apparatus, system, and device, a medium, and a product.

**BACKGROUND**

With the continuous evolution of wireless communication network technologies and protocol standards, the scale of networks has grown. This growth necessitates the construction of more BSs.

In existing technology, BSs are fixed-installed facilities, and are mainly deployed in each area according to the peak network demand in the area. However, users in the area have different demand for the network at different times. Hence, it is important to optimize the use of BS resources.

**SUMMARY**

Provided are a method for base station (BS) scheduling, a device, a system, an apparatus, a computer-readable storage medium, and a computer program product in some embodiments of the present disclosure, which are intended to enhance the utilization of BS facilities.

In accordance with a first aspect of the present disclosure, an embodiment provides a method for BS scheduling, which includes: acquiring BS information, where the BS information includes BS location information and BS traffic information; and generating a scheduling instruction according to the BS information for migrating a BS from a first area to a second area.

In accordance with a second aspect of the present disclosure, an embodiment provides a method for base station (BS) scheduling, which includes: receiving a scheduling instruction, where the scheduling instruction is generated according to BS information, and the BS information includes BS location information and BS traffic information; and migrating from a first area to a second area according to the scheduling instruction.

In accordance with a third aspect of the present disclosure, an embodiment provides a method for base station (BS) scheduling, which includes: sending, by a device for scheduling, a scheduling instruction; receiving, by a BS, the scheduling instruction; and migrating, by the BS, from a first area to a second area according to the scheduling instruction.

In accordance with a fourth aspect of the present disclosure, an embodiment provides a device for base station (BS) scheduling, which includes: an acquisition module, configured to acquire BS information that includes BS location information and BS traffic information; a storage module, configured to store the BS information; an analysis module, configured to generate a scheduling instruction according to the BS information for instructing a BS to migrate from a first area to a second area; and a sending module, configured to send the scheduling instruction.

In accordance with a fifth aspect of the present disclosure, an embodiment provides a communication base station (BS), which includes: a receiving module, configured to receive a scheduling instruction for instructing a BS to migrate from a first area to a second area; a processing module, configured to carry out the scheduling instruction to allow the communication BS to migrate from the first area to the second area; and a flight module, configured to provide flight power to fly the communication BS to the migration destination.

In accordance with a sixth aspect of the present disclosure, an embodiment provides a system for scheduling , which includes the device for BS scheduling according to the fourth aspect and the communication BS according to the fifth aspect.

In accordance with a seventh aspect of the present disclosure, an embodiment provides an apparatus for scheduling, which includes: a memory, a processor, and a computer program stored in the memory and executable by the processor, where the computer program, when executed by the processor, causes the processor to carry out the method of any one of the first, second or third aspect.

In accordance with an eighth aspect of the present disclosure, an embodiment provides a computer-readable storage medium, storing computer-executable instructions configured to cause a computer to execute the method of any one of the first, second or third aspect.

In accordance with a ninth aspect of the present disclosure, an embodiment provides a computer program product, which includes: a computer program or computer instructions stored in a computer-readable storage medium, from which a processor of a computer device reads the computer program or the computer instructions, where the computer program or the computer instructions, when executed by the processor, cause the computer device to execute the method of any one of the first, second or third aspect.

**BRIEF DESCRIPTION OF DRAWINGS**

FIG. 1 is a schematic diagram of deployment of BSs in a city with dense network users;
FIG. 2 is a schematic diagram of a system architecture according to an embodiment of the present disclosure;
FIG. 3a is a flowchart of a method for BS scheduling according to an embodiment of the present disclosure;
FIG. 3b is a flowchart of a method for BS scheduling according to an embodiment of the present disclosure;
FIG. 3c is a flowchart of a method for BS scheduling according to an embodiment of the present disclosure;
FIG. 3d is a flowchart of a method for BS scheduling according to an embodiment of the present disclosure;
FIG. 3e is a flowchart of a method for BS scheduling according to an embodiment of the present disclosure;
FIG. 3f is a flowchart of a method for BS scheduling according to an embodiment of the present disclosure;
FIG. 3g is a flowchart of a method for BS scheduling according to an embodiment of the present disclosure;
FIG. 3h is a flowchart of a method for BS scheduling according to an embodiment of the present disclosure;
FIG. 4 is a flowchart of a method for BS scheduling according to an embodiment of the present disclosure;
FIG. 5 is a flowchart of a method for BS scheduling according to an embodiment of the present disclosure;
FIG. 6 is a flowchart of a method for BS scheduling according to an embodiment of the present disclosure;
FIG. 7 is a flowchart of a method for BS scheduling according to an embodiment of the present disclosure;
FIG. 8 is a schematic diagram of a scenario to which a method for BS scheduling is applied, according to an embodiment of the present disclosure;
FIG. 9 is a flowchart of a method for BS scheduling according to an embodiment of the present disclosure;
FIG. 10 is a flowchart of a method for BS scheduling according to an embodiment of the present disclosure;
FIG. 11 is a flowchart of a method for BS scheduling according to an embodiment of the present disclosure;
FIG. 12 is a schematic diagram of a device for scheduling;
FIG. 13 is a schematic diagram of a communication BS according to an embodiment of the present disclosure;
FIG. 14 is a schematic diagram of an apparatus for scheduling according to an embodiment of the present disclosure; and
FIG. 15 is a schematic diagram of an apparatus for scheduling according to an embodiment of the present disclosure.

**DETAILED DESCRIPTION**

In order to make the objectives, technical schemes, and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that although a functional module division is shown in a schematic diagram of an apparatus and a logical order is shown in a flowchart, the operations shown or described may be executed, in some cases, with a different module division from that of the apparatus or in a different order from that in the flowchart. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those skilled in the art can determine the specific meanings of the above terms in the present disclosure in a rational way in conjunction with the specific contents of embodiments of the technical schemes. In the embodiments of the present disclosure, the term such as "further," "exemplary," or "optionally" is used to represent as an example, an illustration, or a description and should not be construed as being more preferred or advantageous than another embodiment or design. The use of the term such as "further," "exemplary," or "optionally," is intended to present a related concept in a specific manner.

The embodiments of the present disclosure may be applied to various communication systems, such as: a Global System for Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LIE-A) system, a Universal Mobile Telecommunication System (UMTS), 5G, Beyond Fifth Generation (B5G), 6th Generation (6G), etc., which are not limited in the embodiments of the present disclosure.

The embodiments of the present disclosure may be applied to various network coverage scenarios such as towns and villages, which are not limited in the embodiments of the present disclosure.

The BS of the embodiments of the present disclosure may be any device capable of communicating with a user terminal. The BS may be any device having a radio transceiver function, including, but not limited to: a NodeB (NB), an evolved NodeB (eNodeB), a BS in a 5G communication system, a BS in a future communication system, an access node in a Wireless Fidelity (Wi-Fi) system, a wireless relay node, a wireless backhaul node, etc. Alternatively, the BS may be a radio controller in a cloud radio access network (C-RAN) scenario; or the BS may also be a small station, a Transmission Reference Point (TRP), etc., which is not limited in the embodiments of the present disclosure.

In the construction of a wireless communication network, costs of hardware facilities are high. Among the costs of hardware facilities, costs of BSs account for a relatively large proportion. With the development of communication technology, especially the advent of the 5G and 6G communication era, more and more BSs are needed to meet growing network needs. As a result, construction costs of BSs also increase, especially in cities with dense network users.

In cities with dense network users, users' work and lifestyle are regular. For example, during working hours on weekdays, users in living areas such as residential areas and commercial areas converge on working areas such as industrial parks and office buildings; during non-working hours, users in working areas such as industrial parks and office buildings converge on living areas such as residential areas and commercial areas. The regularity of work and lifestyle makes the movement of network users also regular, and further contributes to certain regularity of network demand in different time periods in an area. However, BS facilities in an existing technology are fixedly installed, and it is difficult to dynamically deploy with the change of network demand in different areas and different time periods.

In order to elaborate the technical scheme, the deployment of BSs in the existing technology is further illustrated by taking an urban scenario with more dense network users as an example.

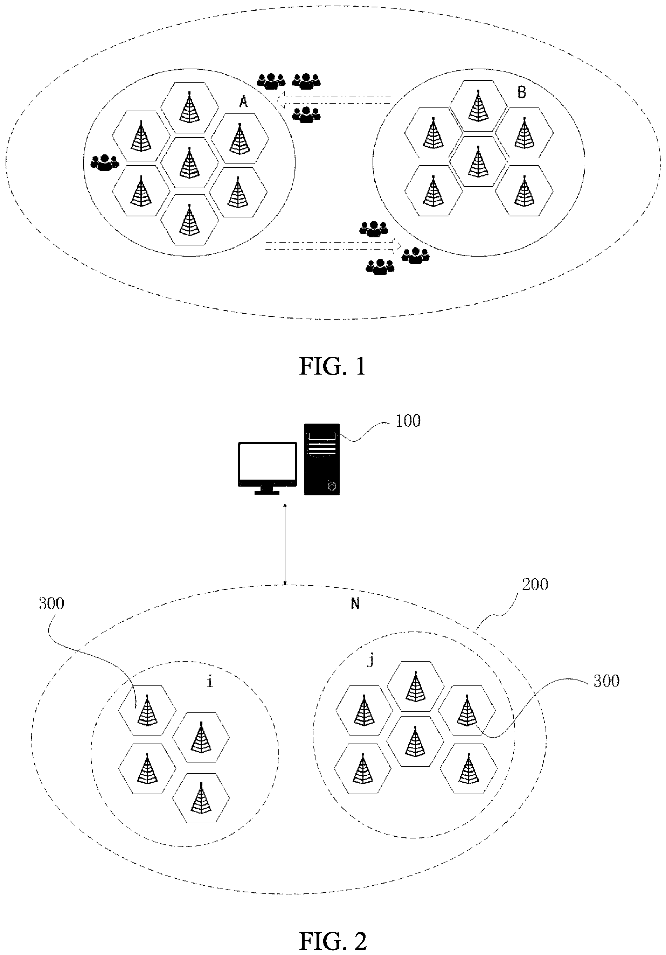

FIG. 1 is a schematic diagram of deployment of BSs in a city with dense network users. As shown in FIG. 1, area A is a living area such as a residential area or a commercial area; and area B is working area such as an industrial park or an office building. In both area A and area B, the number of BSs to be deployed in the area is determined according to a maximum number of user accesses or access traffic in the area. According to living habits of urban network users, most users migrate to area B during working hours on weekdays. Since BSs in area B are designed according to the maximum number of user accesses or access traffic, area B can usually meet network demand of users in the area in this case. However, at the same time, the number of users accessing communication BSs in area A is much lower than the designed number of users, or even no user accesses the BS due to the movement of the users from area A to area B, resulting in low utilization of the communication BSs in area A. Similarly, during non-working hours, communication BSs in area B are prone to have no user access or the number of users access BS much lower than the designed number of users, resulting in low utilization of the communication BSs in area B.

In view of this, some embodiments of the present disclosure provide a method for BS scheduling, a device for scheduling, a communication BS, a scheduling system, an apparatus for scheduling, a computer-readable storage medium and a computer program product. By analyzing BS information in an area, a scheduling instruction is obtained, and a BS autonomously migrates according to the scheduling instruction, thereby improving utilization of the BS and reducing costs of network construction and maintenance. In other embodiments of the present disclosure, a scheduling instruction is obtained by analyzing fault information, burst information, and history information of BSs in an area, and a BS autonomously migrates according to the scheduling instruction, which not only can quickly respond to faults and emergencies, but also can reduce a calculation amount and power consumption while improving the utilization of the BS.

Several embodiments of the present disclosure will be further illustrated below with reference to the accompanying drawings.

FIG. 2 is a schematic diagram of a system architecture in which a method for BS scheduling according to an embodiment of the present disclosure may be performed. As shown in FIG. 2, the scheduling system architecture includes a device for scheduling 100, and the device for scheduling 100 manages BSs 300 in an area 200.

The device for scheduling 100 includes a device for scheduling such as a server which is a hardware device having storage, computing, and communication capabilities, and software installed in the device for scheduling. The device for scheduling 100 and the BSs 300 in the management area 200 may be in wired or wireless communicative connection.

The device for scheduling 100 may acquire location information or traffic information of the BS 300 in each sub-area within the governed area 200 through an acquisition module, and store the information in a storage module. Then, a scheduling instruction is obtained by an analysis module by calculating and analyzing the BS location information and the BS traffic information, and a sending module sends the scheduling instruction to a corresponding BS 300 for migration. The BS 300 in the governed area 200 receives the scheduling instruction through a receiving module, analyzes and executes the instruction through a processing module, and finally autonomously migrates to another location through a flight module. It can be understood that the device for scheduling 100 may be any device capable of implementing the approach described above.

In a possible implementation, after completing the migration, the BS 300 sends new location information to the device for scheduling 100. The device for scheduling 100 updates location information of the corresponding BS 300 stored in the storage module after receiving the information.

In a possible implementation, the device for scheduling 100 may generate a scheduling instruction based on a traffic abnormality of a BS in the governed area 200, for example, BS failure information, and sends the scheduling instruction to another BS, for example, a standby BS or an idle BS. After receiving the scheduling instruction, the another BS autonomously migrates to a location where the faulty BS is located according to the instruction and operates in place of the faulty BS. By using the scheme of this embodiment, not only can the location of the faulty BS be identified, but also the faulty BS can autonomously return to the factory for repair, and another BS can be deployed to the location where the original faulty BS is located to operate in place of the faulty BS. It can be understood that the device for scheduling 100 may alternatively send the scheduling instruction to the faulty BS so that the faulty BS can autonomously return to the factory for repair. Through the above approach, not only can the BS be reasonably deployed, and utilization of the BS improved, but repair costs can also be reduced, and repair efficiency be improved.

In a possible implementation, the device for scheduling 100 may generate the scheduling instruction according to occasional information in the governed area 200. For example, in a case that an aperiodic or occasional crowd gathering activity such as a performance, a show, or an event is scheduled in a specific sub-area, the device for scheduling 100 acquires related information such as BS-related burst traffic information or an administrator instruction, and then generates a scheduling instruction and sends the scheduling instruction to an idle BSs in another sub-area. After receiving the scheduling instruction, the idle BS in another sub-area migrates to a destination/target location according to the instruction to cope with an occasional network demand. By means of the scheme of this embodiment, not only can the utilization of the BS be improved, but a quick response can also be made to an occasional network demand. This avoids network congestion, and improves user's network experience.

It can be understood that the device for scheduling 100 may generate or send a scheduling task including a plurality of scheduling instructions. The plurality of scheduling instructions may be employed to instruct a plurality of BSs to migrate, or may be employed to instruct one BS to migrate at different moments.

It should be noted that the device for scheduling 100 may generate a plurality of scheduling instructions or scheduling tasks. Different scheduling instructions or scheduling tasks may have different execution timeliness, operating costs, required power consumption, execution effect, etc. In order to obtain an optimal scheduling scheme, the device for scheduling can determine a final scheduling instruction or scheduling task according to factors such as a migration speed, migration costs, migration complexity, a migration risk, etc. Through the above approach, costs are further reduced, execution efficiency is improved, and the user's network service experience is improved while improving the utilization of the BS.

The governed area 200 of the device for scheduling 100 includes $N$ number of sub-areas, where $N$ is equal to or greater than 1. At least one BS 300 is deployed in each sub-area. For each sub-area, the number of BSs 300 to be deployed is determined according to the number of user accesses or access traffic in the area. Area $i$ is taken as an example here. $Ki$ number of BSs 300 are deployed in area $i$, and the $Ki$ number of BSs provide a wireless communication service for other communication devices such as a terminal device in area $i$, where $Ki$ is greater than or equal to 1.

It can be understood that some standby BSs may also be deployed in the governed area 200. When the number of idle BSs in an area is insufficient or it is inconvenient to migrate, the standby BSs will migrate to a target location according to the scheduling instruction. Through the above approach, network demand in different situations can be quickly and efficiently met, which improves a network service capability and user's network experience.

A BS 300 includes a communication device/module capable of receiving and processing a wireless signal and a flight module capable of flying. The BS 300 receives the scheduling instruction from the device for scheduling 100 through the receiving module, and then analyzes and executes the scheduling instruction through the processing module. It can be understood that the BS 300 may receive at least one scheduling instruction. A plurality of scheduling instructions may be employed to instruct the BSs to migrate at different times or at different geographical locations. Through the above approach, not only can the utilization of the BS be further improved, but power consumption and communication overheads of the system can also be reduced.

In a possible implementation, the BS 300 can autonomously fly by means of the flight module to realize migration to all the sub-areas of the governed area 200. Areas $i$ and $j$ are taken as an example. The BS 300 in area $i$ can autonomously complete flight and migration from area $i$ to area $j$ through the flight module. Similarly, the BS 300 in area $j$ can autonomously complete flight and migration from area $j$ to area $i$ through the flight module.

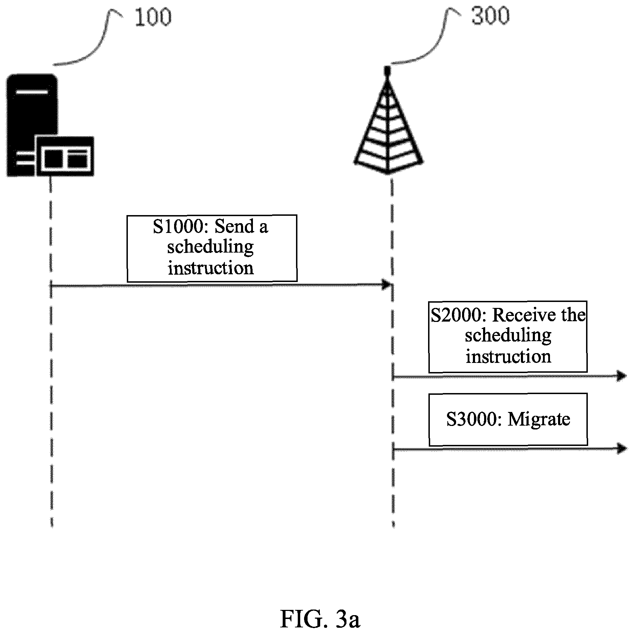

FIG. 3a is a flowchart of a method for BS scheduling according to an embodiment of the present disclosure. As shown in FIG. 3a, the method for BS scheduling is applied to a scheduling system including a device for scheduling 100 and a communication BS 300. The method for BS scheduling can be used for scheduling a BS in an urban area with dense network users, or be used for scheduling a BS in a remote area with few network users, or be used for scheduling a BS to be scheduled which is not accessed to a network service, or be used in other scenarios. The method for BS scheduling may include, but is not limited to, operations S1000, S2000 and S3000.

At operation S1000, the device for scheduling 100 sends a scheduling instruction.

It can be understood that the device for scheduling 100 needs to receive or generate a scheduling instruction before sending the scheduling instruction.

In a possible implementation, the device for scheduling 100 generates the scheduling instruction according to location information and traffic information of all or a part of the BS 300 in an area. The BS location information may be geographical location information of the BS, or may be other information for reflecting a location of the BS, such as longitude, latitude, altitude, province, city, and county at which the BS is located, mountain and river at which the BS is located, and a transportation line. The BS traffic information may include information about the number of users accessing BS or information about BS uplink and downlink traffic.

In another possible implementation, the device for scheduling 100 generates a scheduling task including a plurality of scheduling instructions according to the location information and the traffic information of all or a part of the BS in the area.

The BS location information and the BS traffic information can be obtained in different manners.

- The device for scheduling 100 sends a request for location information or traffic information to all or a part of the BS 300 in the governed area 200, and acquires the location information or traffic information of the BS 300 in real time. It can be understood that the request for the location information or traffic information may be sent regularly or periodically, or may be sent irregularly. The device for scheduling 100 may store the acquired BS information.

- All or a part of the BSs 300 in the governed area 200 report real-time location or traffic information to the device for scheduling 100 regularly or periodically.

- The device for scheduling 100 predicts traffic information of the BSs at a future specific time point according to traffic history information of all or a part of the BS 300 in the governed area 200. It can be understood that the BS location information is relatively less variable, and in order to reduce system power consumption, the BS location information may be updated only when a BS location changes.

- The device for scheduling 100 receives an administrator instruction from a human BS manager, a human network manager, or a network operator (a human network manager is taken as an example below).

The administrator instruction may include BS location or traffic information, or may include a scheduling instruction. Usually, this approach is mainly used to deal with a change in network demand caused by an aperiodic or occasional gathering activity of network end users, such as a large-scale event, a performance and other situations that cannot be predicted by the traffic history information. When there is an aperiodic or occasional gathering activity of network end users, the human network manager evaluates a network demand according to a scale, a site, a time, and the like of the activity, and sends, to the device for scheduling 100 based on the evaluation, predicted traffic information, for example, traffic abnormality information such as a traffic surge due to a large-scale activity.

It should be noted that the device for scheduling 100 may also receive a scheduling instruction or a scheduling task sent from another device. The scheduling instruction or scheduling task may be generated by the human network manager according to location information and traffic information of BSs in a local area, or may be generated according to future traffic information predicted for an aperiodic or occasional gathering activity of network end users as scheduled locally.

At operation S2000, the BS 300 receives the scheduling instruction.

The scheduling instruction may include information such as a migration time, a migration route, and a migration destination of the BS.

The migration time may be a current time point or a time point in the future. For example, when a BS in the area autonomously migrates and returns to the factory due to a failure, another BS that has received the scheduling instruction needs to perform migration as soon as possible, for example, at a current time point, and fly to the destination. Through the above approach, it is possible to quickly locate the faulty BS and efficiently handle the faulty situation. When the device for scheduling 100 predicts that there may be a high network demand at a specific time point in the future in the area, the BS that has received the scheduling instruction may perform migration at a predicted specified time and fly to the destination. Through the above approach, the BS can be deployed in advance to meet a network demand of a specific time period and a specific sub-area in the future, which not only can reasonably deploy the BS, but also can improve user's network experience.

It can be understood that there may be diverse migration routes. However, affected by factors such as building density, transportation control, or weather on the flight route, different migration routes may consume varying time and face different potential risks. When the device for scheduling 100 has a plurality of scheduling instructions for different migration routes, the device for scheduling 100 may select an optimal scheduling instruction from the scheduling instructions according to factors such as timeliness, costs, and potential risks corresponding to the different scheduling instructions, and send the optimal scheduling instruction to the BS 300 for execution. When it is necessary to schedule a plurality of BSs in the area, for example, when it is necessary to migrate a plurality of BSs in order to meet network demand of different areas, the device for scheduling 100 may perform comprehensive analysis according to the plurality of scheduling instructions to obtain the most balanced or optimal scheduling task, and then send the scheduling task including the plurality of scheduling instructions to the BS.

It should be noted that the migration destination is not particularly limited in this scheme provided that the BS can provide a network service at the destination.

At operation S3000, a BS 300 migrates from a current area to a target area according to the scheduling instruction.

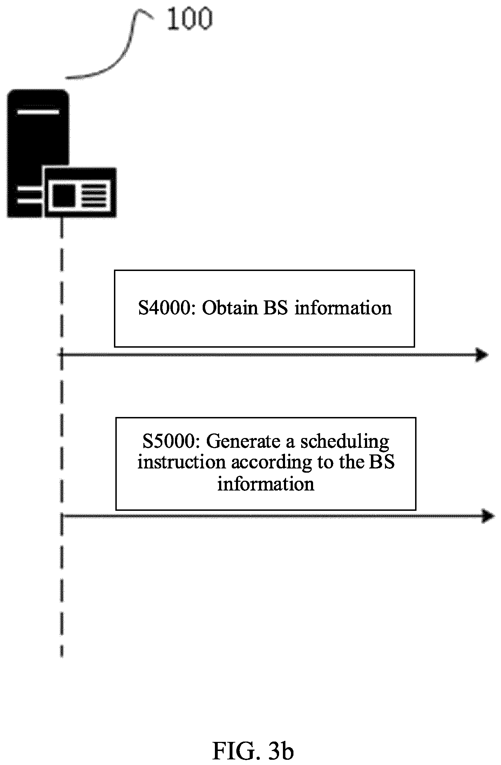

To further illustrate the scheme, a method for BS scheduling according to an embodiment of the present disclosure will be described below with the device for scheduling 100 as an example. As shown in FIG. 3b, the scheduling method is applied to a device for scheduling, which is, the device for scheduling 100 as a part of the system architecture shown in FIG. 3a. The method for BS scheduling may include, but is not limited to, operations 4000, 5000, 6000 and 7000.

At operation 4000, BS information is acquired.

In a possible implementation, the BS information includes BS location information and BS traffic information.

It can be understood that the BS traffic information includes at least one of: the number of users accessing a BS; BS uplink and downlink traffic; BS traffic history information; or BS traffic abnormality information.

In another possible implementation, the BS information further includes an administrator instruction.

At operation 5000, a scheduling instruction is generated according to the BS information.

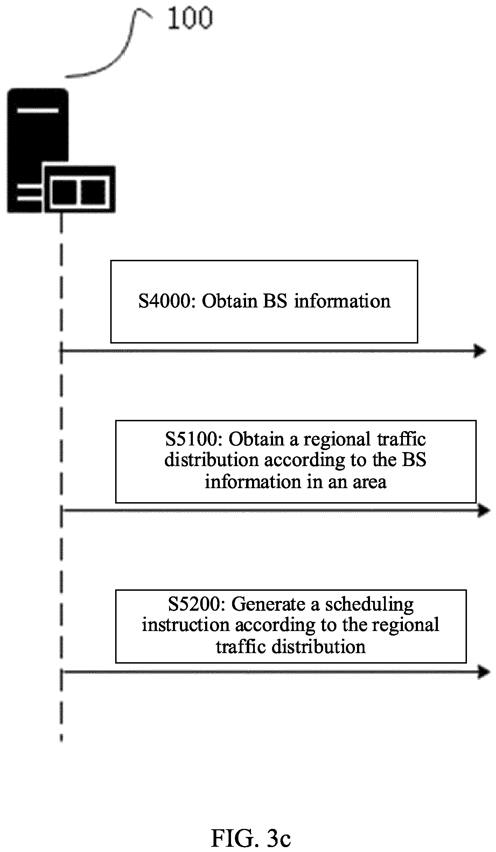

In a possible embodiment, as shown in FIG. 3c, operation 5000 may include, but is not limited to, operation S5100 and operation S5200.

At operation S5100, a regional traffic distribution is obtained according to the BS information in an area.

At operation S5200, the scheduling instruction is generated according to the regional traffic distribution.

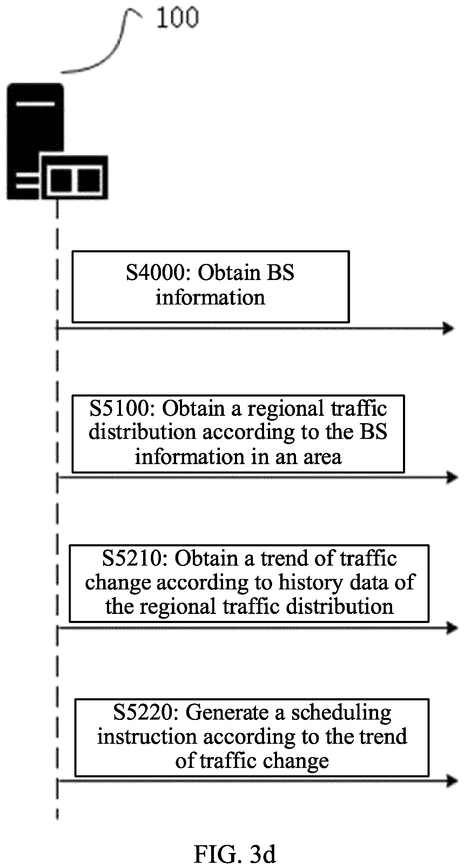

In a possible embodiment, as shown in FIG. 3d, operation 5200 may include, but is not limited to, operation S5210 and operation S5220.

At operation S5210, a traffic change trend is obtained according to history data of the regional traffic distribution.

It should be noted that the traffic change trend is predicted according to the history data of the regional traffic distribution.

At operation S5220, the scheduling instruction is generated according to the traffic change trend.

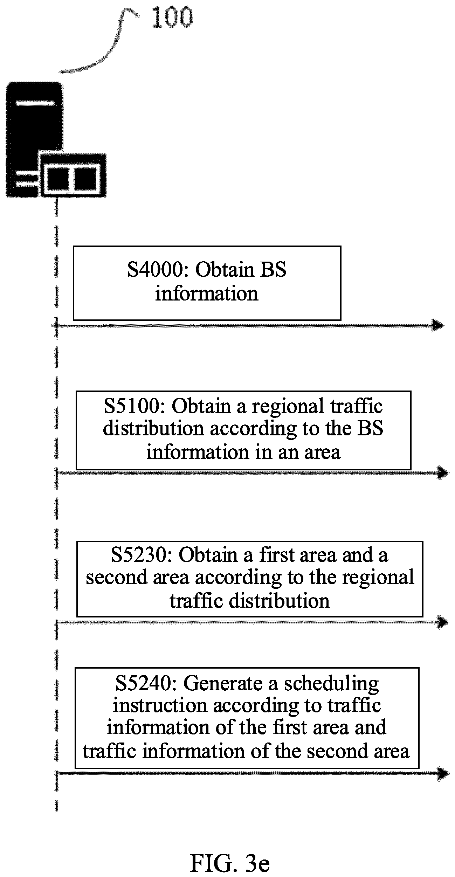

In another possible embodiment, as shown in FIG. 3e, operation 5200 may include, but is not limited to, operation S5230 and operation S5240.

At operation S5230, a first area and a second area are obtained according to the regional traffic distribution.

The first area may include a traffic idle area. The traffic idle area may be an area in which the number of users accessing BS in the area is less than a first idle threshold or may be an area in which BS uplink and downlink traffic in the area is less than a second idle threshold.

The second area may include a traffic warning area. The traffic warning area may be an area in which the number of users accessing BS in the area is greater than a third warning threshold or may be an area in which the BS uplink and downlink traffic in the area is greater than a fourth warning threshold.

At operation S5240, the scheduling instruction is generated according to traffic information of the first area and traffic information of the second area.

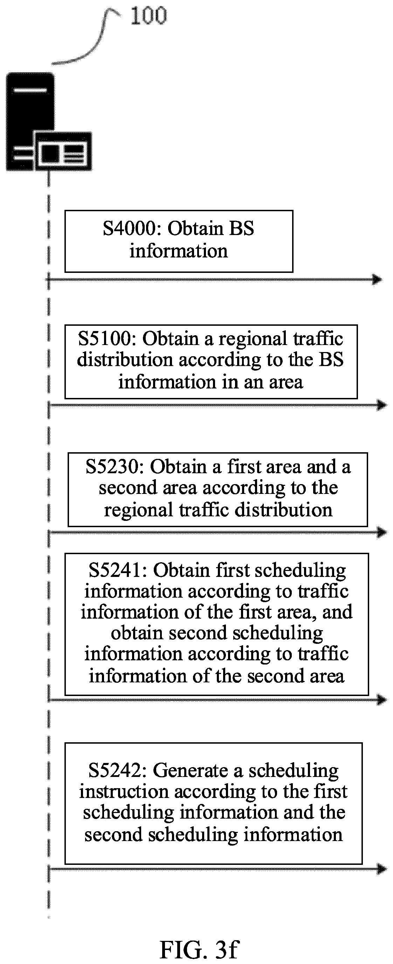

In a possible implementation, as shown in FIG. 3f, operation S5240 may include, but is not limited to, operation S5241 and operation S5242.

At operation S5241, first scheduling information is obtained according to the traffic information of the first area, and second scheduling information is obtained according to the traffic information of the second area.

At operation S5242, a scheduling instruction is generated according to the first scheduling information and the second scheduling information.

In a possible implementation, the first scheduling information may include at least one of: quantity information of idle base station(s); location information of idle base station(s); or idle time information of idle base station(s).

In a possible implementation, the second scheduling information may include at least one of: quantity information of immigrating base station(s); location information of immigrating base station(s; or time information of immigrating base station(s).

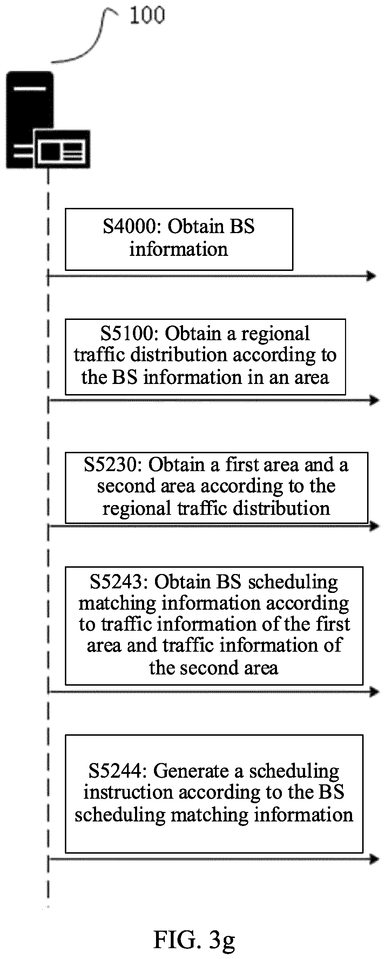

In another possible implementation, as shown in FIG. 3g, operation S5240 may include, but is not limited to, operation S5243 and operation S5244.

At operation S5243, BS scheduling matching information is obtained according to the traffic information of the first area and the traffic information of the second area.

It can be understood that, according to the traffic information of the first area and the traffic information of the second area, a BS to be scheduled and a scheduling instruction or scheme are first determined. Then the BS scheduling matching information is obtained according to information such as the BS that can be migrated and the destination of migration.

At operation S5244, the scheduling instruction is generated according to the BS scheduling matching information.

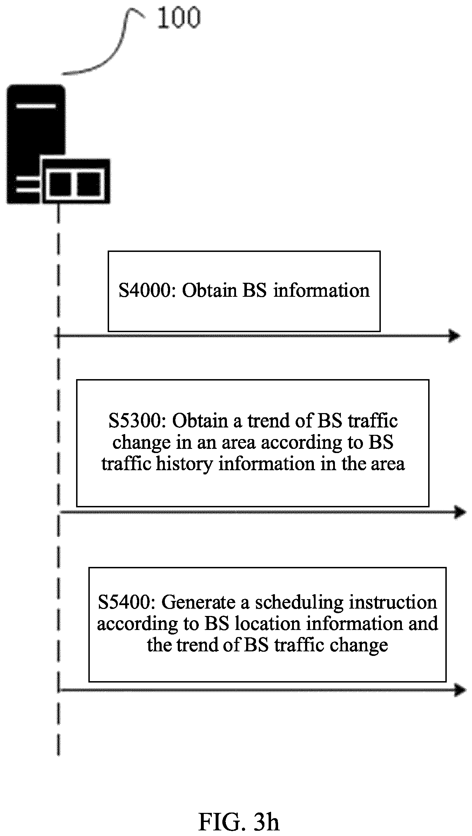

In another possible implementation, as shown in FIG. 3h, operation 5000 may include, but is not limited to, operation S5300 and operation S5400.

At operation S5300, a trend of BS traffic change in an area is obtained according to the BS traffic history information in the area.

At operation S5400, the scheduling instruction is generated according to the BS location information and the trend of BS traffic change.

It can be understood that the BS information may include the BS traffic history information. In a possible implementation, according to the BS traffic history information in the area, a trend of BS traffic change in a specific time point or a specific time period in the future in the area is predicted. Then the scheduling instruction is generated according to the BS location information and the trend of BS traffic change in the area.

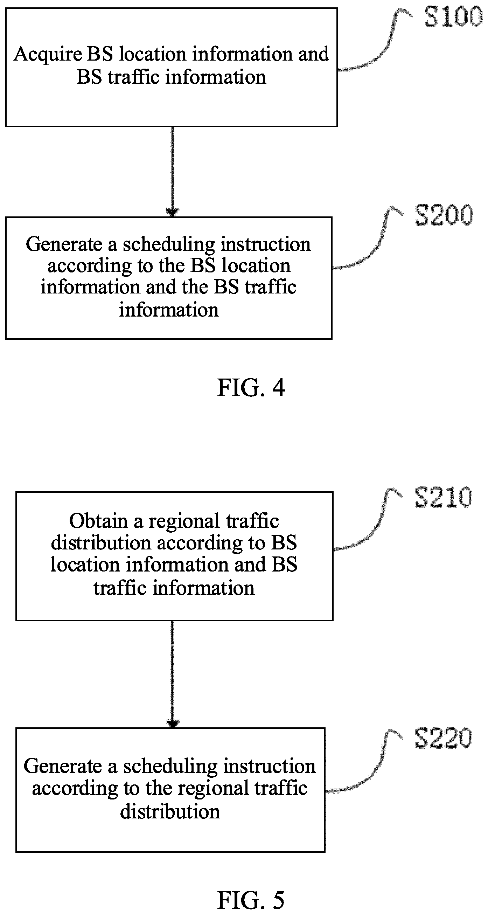

FIG. 4 is a flowchart of a method for BS scheduling according to an embodiment of the present disclosure. As shown in FIG. 4, the method for BS scheduling is applied to a device for scheduling, which is, the device for scheduling 100 as a part of the system architecture shown in FIG. 3a. The method for BS scheduling may include, but is not limited to, operation S100 and operation S200.

At operation S100, BS location information and BS traffic information are acquired.

In a possible implementation, the device for scheduling acquires location information of all or a part of BSs in a governed area in advance.

In another possible implementation, the device for scheduling acquires the location information of all or a part of the BSs in the governed area regularly or in real time.

In a possible implementation, the device for scheduling regularly sends a request for traffic information to all or a part of the BSs in the governed area to acquire the BS traffic information in real time.

In another possible implementation, the device for scheduling regularly acquires real-time traffic information sent by the BS in the governed area to the device for scheduling.

In another possible implementation, the device for scheduling predicts traffic information at a future time point according to BS traffic history information in the governed area. To facilitate prediction of future traffic information, the device for scheduling may store previously received traffic information into a storage module.

In another possible implementation, when a human network manager is aware of an activity of network users gathering, such as a scheduled performance, a show, an event or another aperiodic or occasional crowd gathering activity, the human network manager may generate predicted traffic information according to an activity situation, and the device for scheduling acquires the BS traffic information for the aperiodic or occasional scenario.

It can be understood that the BS location information and the BS traffic information may be acquired separately or obtained altogether.

In a possible implementation, the BS location information includes geographical location information of the BS.

It can be understood that the BS location information may also be other information for reflecting a location of the BS, such as longitude, latitude, altitude, province, city, and county at which the BS is located, or mountain and river at which the BS is located, and a transportation line.

In a possible implementation, the BS traffic information includes a current number of access users and access traffic information of the BS.

It can be understood that the BS traffic information may also be other information that reflects the traffic of the BS, such as a traffic information acquisition time, an access user threshold, an access traffic threshold, a maximum number of access users, maximum access traffic, or the like.

The device for scheduling may send a location and traffic query request to the BS through an optical fiber, a coaxial line, or another wired connection medium connected to the BS, or may send a location and traffic query request to the BS through a wireless signal.

At operation S200, a scheduling instruction is generated according to the BS location information and the BS traffic information.

An area includes a plurality of sub-areas, in which different network demands occur. The area includes a plurality of BSs. With different network demands, the number of BSs for subsequent migration or immigration may be the same or may be different. It can be understood that the device for scheduling may generate a plurality of scheduling instructions according to the network demand of the sub-area in the area and BS location information and BS traffic information of the BSs. Different scheduling instructions may have different execution timeliness, operating costs, required power consumption, execution effect, etc. In order to obtain an optimal scheduling scheme, the device for scheduling can determine an optimal scheduling task including a plurality of scheduling instructions according to factors such as a migration speed, migration costs, migration complexity, a migration risk, etc. Through the above approach, costs are further reduced, execution efficiency is improved, and user's network service experience is improved while improving utilization of the BSs.

FIG. 5 is a flowchart of a method for BS scheduling according to an embodiment of the present disclosure. As shown in FIG. 5, operation S200 is further illustrated. Operation S200 may include but is not limited to operations S210 and S220.

At operation S210, a regional traffic distribution is obtained according to the BS location information and the BS traffic information.

It can be understood that the regional traffic distribution may be indicative network access statuses and locations of all or a part of BSs in the governed area. The regional traffic distribution at least includes the number of users accessing BS and access traffic of the BSs in the governed area.

In a possible implementation, a traffic distribution in each sub-area in the governed area can be obtained according to the regional traffic distribution.

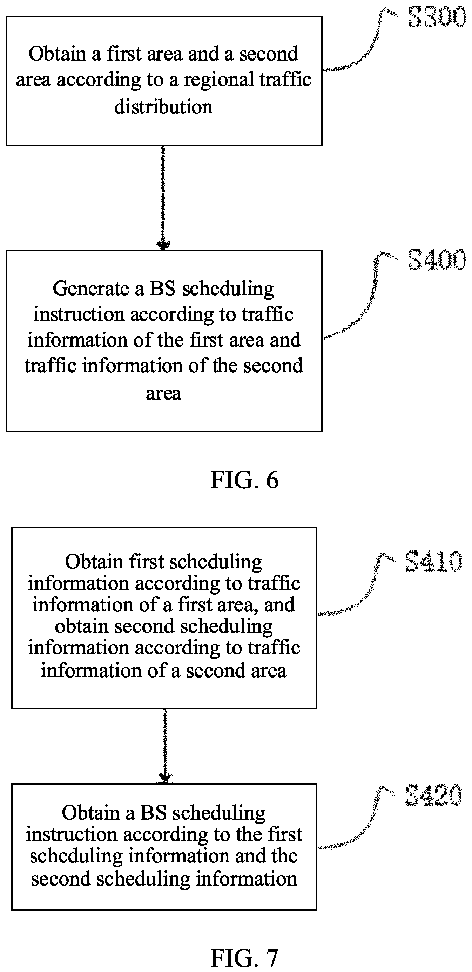

At operation S220, the scheduling instruction is generated according to the regional traffic distribution. FIG. 6 is a flowchart of a method for BS scheduling according to an embodiment of the present disclosure.

As shown in FIG. 6, operation S220 is further illustrated. Operation S220 may include but is not limited to operations S300 and S400.

At operation S300, a first area and a second area are obtained according to the regional traffic distribution.

In a possible implementation, the sub-areas can be divided into different areas according to the traffic distribution within the governed area. For example, the sub-areas are divided into at least one traffic-idle first area or at least one traffic-warning second area.

In a possible implementation, all traffic idle areas can be grouped into a traffic idle area set, and all traffic warning areas can be grouped into a traffic warning area set.

Since the BS traffic information acquired by the device for scheduling may be current real-time data, or may be predicted or planned data at a designated time point in the future, the obtained traffic idle area may be a current or future traffic idle area, and the obtained traffic warning area may be a current or future traffic warning area.

In a possible implementation, the traffic idle area may be an area in which the number of users accessing BS in the area is less than a first idle threshold, or may be an area in which BS access traffic in the area is less than a second idle threshold.

In another possible implementation, the traffic idle area may be an area in which the number of users accessing BS in the area is less than a fifth idle threshold and access traffic is less than a sixth idle threshold.

It can be understood that the first idle threshold, the second idle threshold, the fifth idle threshold, and the sixth idle threshold may be critical values separately preset according to an actual network situation for indicating whether traffic of the BS is idle. The first idle threshold, the second idle threshold, the third idle threshold, and the fourth idle threshold may be the same or different, and may be adjusted according to various types of network-related information such as a network demand, the number of BSs, and the number of users in the area.

In a possible implementation, the traffic warning area may be an area in which the number of users accessing BS in the area is greater than the third idle threshold, or may be an area in which the BS access traffic in the area is greater than the fourth idle threshold.

In another possible implementation, the traffic warning area may be an area in which the number of users accessing BS in the area is greater than a seventh idle threshold and access traffic is greater than an eighth idle threshold.

It can be understood that the third idle threshold, the fourth idle threshold, the seventh idle threshold, and the eighth idle threshold may be critical values separately preset according to an actual network situation for indicating whether traffic of the BS is in a warning state. The first idle threshold, the second idle threshold, the third idle threshold, and the fourth idle threshold may be the same or different, and may be adjusted according to various types of network-related information such as a network demand, the number of BSs, and the number of users in the area.

In another possible implementation, the traffic warning area may be an area where it is predicted that there will be a large number of access users or larger access traffic at a specific time point in the future according to traffic distribution history. Methods for predicting the traffic distribution include time series analysis, neural networks, and the like.

In another possible implementation, the traffic warning area may be an area where there is a faulty BS or a BS that needs to be replaced or repaired.

In another possible implementation, the traffic warning area may be an area where an aperiodic or occasional crowd gathering activity such as a performance, a show and or an event is scheduled.

At operation S400, the BS scheduling instruction is obtained according to traffic information of the first area and traffic information of the second area.

The device for scheduling obtains the scheduling instruction for scheduling the BS according to scheduling information of the idle area and scheduling information of the warning area. The scheduling instruction is used to instruct a BS to migrate from the idle area to the warning area.

In a possible implementation, the scheduling instruction may include at least one of BS identifier information, a migration time, a migration route, and a migration destination. The BS identifier information is used to identify a BS to be migrated, and through the BS identifier information, it is determined whether a BS that has received the scheduling instruction is consistent with a BS that is to be scheduled. The migration time represents a time at which the BS performs migration. The migration route represents a route, for example, a flight route, by which the BS performs migration. The migration destination represents a location as a destination to which the BS is to be migrated.

In a possible implementation, the migration destination may be a location, as a destination in the warning area for which a BS is immigrating, identified by the scheduling system.

In another possible implementation, the migration destination may be a location where a faulty BS is found or identified, or a BS needs to be repaired or maintained.

Since the BS traffic information acquired by the device for scheduling may be current real-time data, or may be predicted or planned data at a designated time point in the future, the migration time may be a current time point or a designated future time point. The migration route is used to indicate a route by which the migrating BS is migrated to the migration location. The migration destination is used to indicate a location into which the BS needs to be moved.

In another possible implementation, the scheduling instruction includes idle level information of an idle BS, predicted traffic information of the idle area, current access traffic of the idle BS, or maximum access traffic of the idle BS. The idle level information is indicative of the access traffic of the BS, and can be determined by a ratio of the current access traffic to the maximum access traffic. The predicted traffic information of the idle area is used to indicate traffic information of the area in the future, and can be predicted by history data or predicted by activity information obtained in advance that results in gathering of network users.

This embodiment provides a method for BS scheduling. By analyzing location and traffic information of BSs in areas, usage statuses of the BSs in the areas are determined, and according to the usage statuses, division into different areas is performed. According to traffic information of different areas, a BS scheduling instruction is generated, realizing scheduling of the BS across different areas. This improves utilization of the BSs, prevents the BSs in the area from being accessed by no user or few users, and also avoid network congestion caused by excessive load of the BSs in the area.

FIG. 7 is a flowchart of a method for BS scheduling according to an embodiment of the present disclosure. As shown in FIG. 7, operation S400 is further illustrated. Operation S400 may include but is not limited to operations S410 and S420.

At operation S410, first scheduling information is obtained according to the traffic information of the first area, and second scheduling information is obtained according to the traffic information of the second area.

The device for scheduling determines the respective scheduling information according to traffic information of each area.

In a possible implementation, the scheduling information includes quantity information of the base stations to be migrated. For an idle area, the obtained scheduling information includes quantity information of idle base stations, i.e., information such as the number of base stations that can be moved out. For a warning area, the obtained scheduling information includes quantity information of immigrating base stations.

In another possible implementation, the scheduling information includes quantity information and location information of the base stations to be migrated. For an idle area, the obtained scheduling information includes quantity information or location information of idle BS, i.e., information such as the number or locations of base stations that can be moved out. For a warning area, the obtained scheduling information includes quantity information or location information of immigrating base stations .

Specifically, the device for scheduling determines, according to traffic information of the idle area, the number of idle base stations, that is, the number or locations of base stations that can be moved out. It can be understood that moving out the idle BS in the idle area does not affect communication of users in the area. The device for scheduling determines, according to traffic information of the warning area, the number or locations of BSs that need to be immigrated in the area, that is, the number of communication BSs needed to meet a communication demand in the area.

Since the BS traffic information acquired by the device for scheduling may be current real-time data, or may be predicted or planned data at a designated time point in the future, the obtained scheduling information may be current or future scheduling information of the idle area, or may be current or future scheduling information of the warning area. In another possible implementation, the scheduling information includes quantity information, location information, and time information of the base stations to be migrated. For an idle area, the obtained scheduling information includes quantity information, location information, or time information of idle base stations, i.e., information such as the number, locations, or time of base stations that can be moved out. For a warning area, the obtained scheduling information includes quantity information, location information, or time information of immigrating base stations .

At operation S420, a base station scheduling instruction is obtained according to the first scheduling information and the second scheduling information.

This embodiment provides a method for BS scheduling. Through the scheduling instruction, a corresponding BS is instructed to autonomously migrate from the first area, such as a current area, to the second area, so as to improve utilization efficiency of the BS in the current area, alleviate a load of the BS in the second area caused by the excessive number of access users or access traffic or the like, and avoid network congestion in the second area.

In a possible implementation, a scheduling scheme may be generated according to scheduling information of each sub-area, where the scheduling scheme includes one or more sets of scheduling instructions for scheduling a plurality of BSs.

In a possible implementation, according to traffic distribution history of each sub-area, periodicity of traffic changes in the area can be analyzed, and the scheduling scheme can be generated according to the periodicity of the traffic changes in the area. The scheduling scheme includes scheduling instructions executed at some time point in the future.

In a possible implementation, according to traffic history information of each BS, periodicity of traffic changes of each BS can be analyzed, and the scheduling scheme can be generated according to the periodicity of the traffic changes of the BS. The scheduling scheme includes scheduling instructions executed at some time point in the future.

For example, the scheduling scheme is formulated according to periodic changes of traffic in a living area and a working area. Formulating a scheduling scheme can reduce real-time generation of a scheduling scheme or instructions, thereby reducing a calculation amount and power consumption of a scheduling system.

It can be understood that since there are a plurality of BSs in each sub-area, the device for scheduling may generate at least one scheduling instruction according to the traffic distribution. For example, there are a plurality of idle BSs in the idle area, and a plurality of BSs need to be moved into the warning area. The following uses a case that there are two idle BSs in the idle area and two BSs need to be moved into the warning area as an example for further explanation.

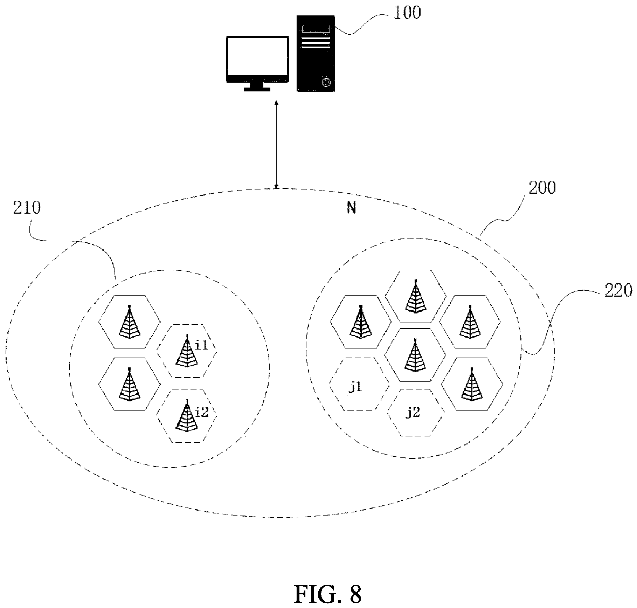

FIG. 8 is a scenario to which the method for BS scheduling of the present disclosure is applied. As shown in FIG. 8, there are two idle BSs, $i_1$ and $i_2$, in an idle area 210, and a warning area 220 is in need of two BSs, $j_1$ and $j_2$, to be moved in. In this case, $i_1$ may be moved into $j_1$ and $i_2$ may be moved into $j_2$ through scheduling instructions, or $i_1$ may be moved into $j_2$ and $i_2$ may be moved into $j_1$ by using scheduling instructions. That is, the scheduling scheme includes two different scheduling instructions, which have different timeliness, costs, and the like.

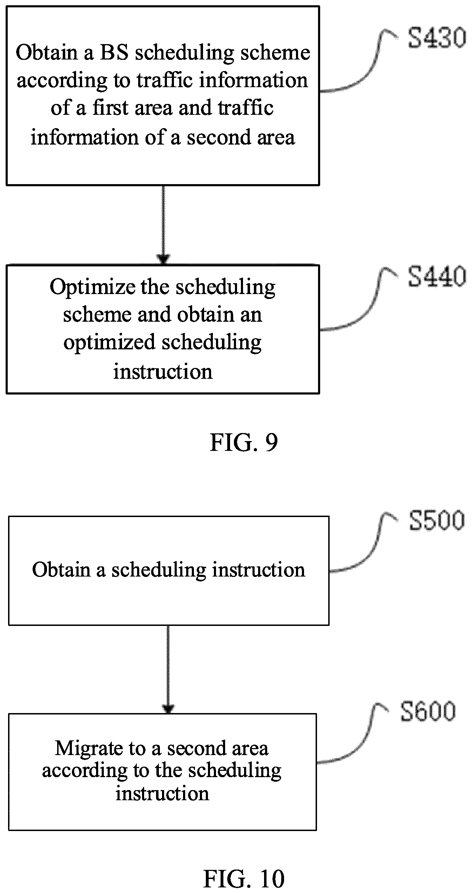

FIG. 9 is a flowchart of a method for BS scheduling according to another embodiment of the present disclosure. As shown in FIG. 9, to obtain an optimal scheduling instruction, a scheduling matching model can be used to optimize scheduling instructions. Operation S400 is further illustrated below. Operation S400 may include but is not limited to operations S430 and S440.

At operation S430, BS scheduling matching information is obtained according to the traffic information of the first area and the traffic information of the second area.

In a possible implementation, the BS scheduling matching information may be obtained by using a matching degree model. The following further explains the BS scheduling matching information by using an $m^{th}$ idle BS in idle area $i$ and an $n^{th}$ BS needing to be moved into warning area $j$ as an example.

Factors considered for the BS scheduling matching information include BS location information $r$, BS idle level $v$, future traffic trend $d$ of an area at which the BS is located, and migration route complexity $c$. According to these four factors, a matching degree model of the $m^{th}$ idle BS in idle area $i$ and the $n^{th}$ BS needing to be moved into warning area $j$ is constructed as follows:

$$M_{im,jn} = \frac{w_1}{\left| \mathbf{r}_{im} - \mathbf{r}_{jn} \right|^\alpha} + w_2 v_{im} + \frac{w_3}{d_i} + \frac{w_4}{c_{im,jn}}, \quad (i \in V, j \in A), \qquad (1)$$

In the equation above, $r_{im}$ and $r_{jn}$ respectively represent a spatial position of the $m^{th}$ BS currently located in area i and the $n^{th}$ BS planned to be moved into area $j$; $v_{im}$ represents an idle level of the $m^{th}$ BS in area $i$, which is determined by a ratio of current access traffic to designed maximum access traffic; $d_i$ represents predicted traffic of area $i$; $c_{im,jn}$ represents the complexity of BS's migration from $r_{im}$ to $r_{jn}$, the complexity including density of buildings, a degree of transportation control, a degree of weather effect and the like on a flight route; $w_1$, $w_2$, $w_3$, $w_4$ and $\alpha$ are real coefficients greater than 0; and the larger a value of $M_{im,jn}$, the more suitable it is for the $m^{th}$ BS in area $i$ to move to n position in area $j$.

It can be seen from equation (1) that a closer distance of a BS to the migration destination indicates a higher matching degree; a higher idle level of the BS indicates a higher matching degree; a lower traffic demand in the future in an area at which a BS is located indicates a higher matching degree of the BS; and lower complexity of a migration route indicates a higher matching degree of the BS. According to equation (1), BS scheduling matching information between a BS to be moved out and a BS to be moved in can be obtained.

It can be understood that a scheduling task may be composed of a plurality of scheduling instructions, that is, a plurality of migration modes, each of which determines that a communication BS in an idle area migrates to a traffic warning area. Therefore, an optimization goal of the scheduling task is to maximize the sum of matching degrees of scheduling instructions, that is:

$$\max_{(im,jn)} \sum_{i \in V, j \in A} M_{im,jn}, \qquad (2)$$

In a possible implementation, optimization methods such as a linear programming algorithm, a genetic algorithm and an ant colony optimization algorithm may be used to solve equation (2). According to equation (2), optimal BS scheduling matching information between the BS to be moved out and the BS to be moved into in the idle area and the warning area can be obtained.

It should be noted that the optimization of the scheduling task may be processing of a plurality of scheduling instructions for a plurality of BSs, or may be processing of a plurality of scheduling instructions for one BS. In this embodiment, the optimal scheduling instruction can be determined from among a plurality of scheduling instructions by using the matching degree model. In particular, when there are a plurality of BSs that need to be scheduled, by solving the above equation (2), an optimal scheduling instruction set can be obtained, that is, an optimal scheduling task can be obtained, which is conducive to reducing system work, reducing migration costs, minimizing a migration risk, improving migration efficiency, and improving network service experience.

At operation S440, the BS scheduling instruction is obtained according to the BS scheduling matching information.

A set of scheduling instructions can be obtained according to the BS scheduling matching information. The device for scheduling sends the scheduling instructions to corresponding BSs one by one, and each BS, upon receiving the respective scheduling instruction, performs migration. The device for scheduling may deliver scheduling instructions to the BSs in a wireless or wired manner.

FIG. 10 is a flowchart of a method for BS scheduling according to an embodiment of the present disclosure. As shown in FIG. 10, the method for BS scheduling is applied to a BS, which is, for example, the BS 300 in the system architecture shown in FIG. 3a. The method for BS scheduling can be used for scheduling a BS in an urban area with dense network users, or be used for scheduling a BS in a remote area with few network users, or be used for scheduling a BS to be scheduled which is not accessed to a network service, or be used in other scenarios. The method for BS scheduling may include, but is not limited to, operations S500 and S600.

At operation S500, a scheduling instruction is obtained.

In a possible implementation, the scheduling instruction includes a migration time, a migration route, and a migration destination for migration from a current area to another area, for example, a second area.

At operation S600, migration is performed according to the scheduling instruction.

In a possible implementation, the BS that is to move out includes a flight module, and the BS migrates to the second area with flight power provided by the flight module.

This embodiment provides a method for BS scheduling. A scheduling system can quickly identify a traffic warning area according to the regularity of periodic movement of network user groups in an area, and realize fast, flexible, and optimal scheduling of communication BSs in the area, so as to improve access quality of a wireless network and reduce hardware costs for a telecommunication operator without increasing financial input of BSs.

To facilitate migration, the BS may disable a wireless access service before performing migration, then activate the flight module, and finally migrate from a first area to the second area through the flight module. After performing migration, the BS may send migration complete message to the scheduling system and enable the wireless access service.

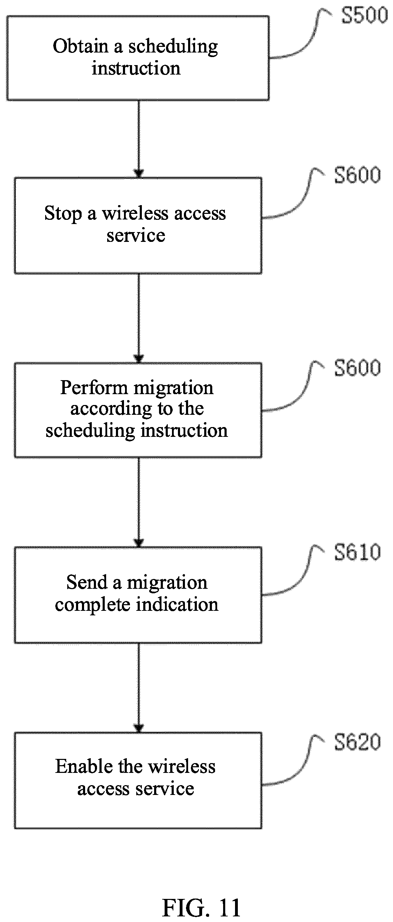

FIG. 11 is a flowchart of a method for BS scheduling according to an embodiment of the present disclosure. As shown in FIG. 11, the method for BS scheduling is applied to a BS. The method for BS scheduling may include, but is not limited to, operations S500 and S600.

At operation S500, a scheduling instruction is obtained.

A BS that is to move out receives the scheduling instruction, and confirms information in the scheduling instruction, such as BS identifier information, a migration time, a migration route, and a migration destination.

At operation S510, a wireless access service is terminated.

After confirming that the scheduling instruction is correct, a wireless network access service of a current area is terminated or disabled before the migration time, and scheduling instruction confirmed information is sent to a scheduling system.

At operation S600, migration is performed according to the scheduling instruction.

The BS activates its flight module according to the migration time, navigates the flight according to the planned migration route, and reaches the migration destination.

At operation S610, a migration complete indication is sent.

After reaching the migration destination, the BS feeds back completion of the migration instruction to the scheduling system. For example, the BS sends a migration complete indication or message. After receiving the message, sent by the BS, indicating the completion of the migration instruction, the scheduling system updates location information of the BS, that is, deletes original location information of the BS and adds current location information of the BS.

At operation S620, the wireless access service is enabled.

After the BS reaches the migration destination or feeds back the migration instruction, the BS completes a network connection and starts the wireless access service.

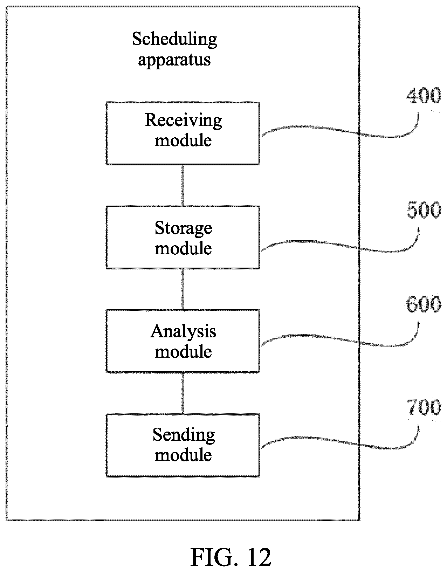

FIG. 12 is a schematic diagram of a device for scheduling according to an embodiment of the present disclosure. As shown in FIG. 12, the device for scheduling provided in this embodiment of the present disclosure can execute the method for BS scheduling provided in the embodiments of the present disclosure, has functional modules for execution of the method and can achieve corresponding technical effects. The apparatus can be implemented as software, hardware or a combination of software and hardware, including: an acquisition module 400, a storage module 500, an analysis module 600, and a sending module 700.

The acquisition module 400 is configured to acquire BS location information and BS traffic information, where the BS location information includes geographical location information of a BS, and the BS traffic information includes the number of users currently accessing BS and access traffic information of the BS.

The storage module 500 is configured to store the BS location information and the BS traffic information.

The analysis module 600 is configured to obtain a scheduling instruction according to the BS location information and the BS traffic information, where the scheduling instruction is intended to instruct a BS to migrate from a first area to a second area.

The sending module 700 is configured to send the scheduling instruction to instruct the BS to migrate from a current area to another area, for example, a traffic warning area.

This embodiment provides a BS apparatus. Through real-time traffic monitoring and accurate traffic trend prediction, migration of BSs in an urban area can be reasonably planned, so that more BSs can be gathered in an area with denser users and larger traffic, which better utilizes BSs deployed by an operator and achieves better network coverage without increasing hardware devices.

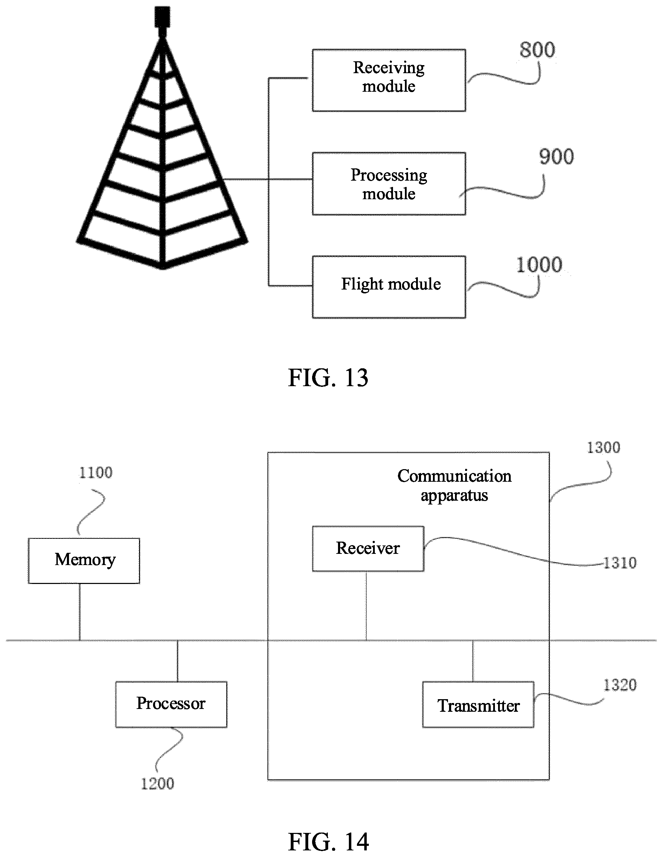

FIG. 13 is a schematic diagram of a communication BS according to an embodiment of the present disclosure. As shown in FIG. 13, the communication BS provided in this embodiment of the present disclosure can execute the method for BS scheduling provided in the embodiments of the present disclosure, has functional modules for execution of the method and can achieve corresponding technical effects. The apparatus can be implemented as software, hardware or a combination of software and hardware, including: a receiving module 800, a processing module 900, and a flight module 1000.

The receiving module is configured to receive a scheduling instruction, where the scheduling instruction includes a migration time, a migration route, and a migration destination.

The processing module is configured to carry out the scheduling instruction, to allow the communication BS to perform a migration at the migration time to the migration destination according to the migration route.

The flight module is configured to fly the communication BS to the migration destination.

In a possible implementation, when a BS 300 in the governed area 200 is faulty and fails to provide a wireless access service, the BS may send a factory repair request to the device for scheduling 100. After receiving the factory repair request from the BS 300, the device for scheduling 100 determines a suitable repair location as a migration destination of the faulty BS and generates a scheduling instruction and feeds back the scheduling instruction to the faulty BS. Then, the faulty BS performs a factory return task. At the same time, the device for scheduling 100 generates a second scheduling instruction for scheduling another BS to replace the currently faulty BS and maintain the wireless access service in the area. The BS for replacement may be selected from idle BSs in a nearby area, or may be selected from BSs on standby at a repair site.

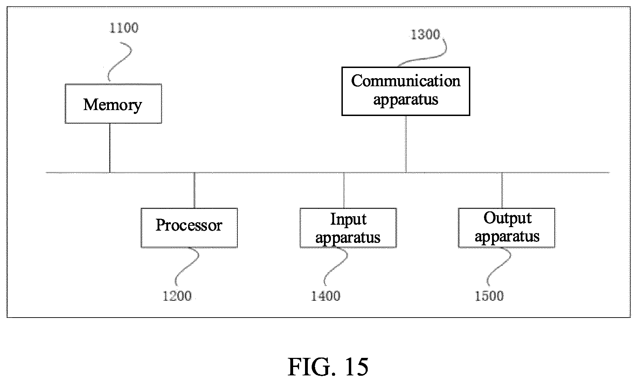

FIG. 14 is a schematic diagram of an apparatus for scheduling according to an embodiment of the present disclosure. As shown in FIG. 14, the device includes a memory 1100, a processor 1200, and a communication apparatus 1300. There may be one or more memories 1100 and processors 1200, although one memory 1100 and one processor 1200 are shown by way of an example in FIG. 14. The memory 1100 and the processor 1200 of the device may be connected by a bus or in other ways. In FIG. 15, the connection is shown to be implemented as a bus, by way of example.

As a computer-readable storage medium, the memory 1100 may be configured to store a software program, a computer-executable program, and a module, for example, the program instructions/modules corresponding to the resource determination method of any one of the embodiments of the present disclosure. The processor 1200 implements the above resource determination method by running the software programs, instructions and modules stored in the memory 1110.

The memory 1100 may mainly include a program storage area and a data storage area, where the program storage area may store an operating system and application program(s) required by at least one feature. In addition, the memory 1100 may include a high-speed random-access memory and a non-volatile memory, for example, at least one magnetic disk storage device, a flash memory device, or another non-volatile solid-state storage device. In some examples, the memory 1100 may further include memories remotely located with respect to the processor 1200, and these remote memories may be connected to the device via a network. Examples of the above-mentioned network include, but are not limited to, the Internet, an intranet, a local area network, a mobile communication network, and a combination thereof.

The communication apparatus 1300 is configured to transmit and receive information according to control of the processor 1200.

In an embodiment, the communication apparatus 1300 includes a receiver 1310 and a transmitter 1320. The receiver 1310 is a module or a combination of devices in an electronic device that receives data. The transmitter 1320 is a module or a combination of devices in an electronic device that transmits data.

As shown in FIG. 15, in an embodiment, the apparatus for scheduling may further include an input apparatus 1400 and an output apparatus 1500.

The input apparatus 1400 may be configured to receive an input numerical digit or character information and generate a keying signal input related to user settings and function control of the device. The output apparatus 1500 may include a display device such as a display screen.

A further embodiment of the present disclosure provides a computer-readable storage medium storing computer-executable instructions for executing a method for BS scheduling as provided in any embodiment of the present disclosure.

A further embodiment of the present disclosure provides a computer program product, including a computer program or computer instructions, where the computer program or the computer instructions are stored in a computer-readable storage medium, a processor of a computer device reads the computer program or the computer instructions from the computer-readable storage medium, and the computer program or the computer instructions, when executed by the processor, cause the computer device to perform the method for BS scheduling according to any of the embodiments of the present disclosure.

The system architecture and an application scenario described in the embodiment of the present disclosure are for more clearly describing the technical schemes of the embodiments of the present disclosure, and do not constitute a limitation on the technical schemes provided by the embodiments of the present disclosure. Those of ordinary skill in the art may understand that, with evolution of the system architecture and emergence of new application scenarios, the technical schemes provided by the embodiments of the present disclosure are also applicable to similar technical problems.

It can be understood by those of ordinary skill in the art that all or some of the operations of the methods, systems and functional modules/units in the devices disclosed above can be implemented as software, firmware, hardware, and appropriate combinations thereof.

In a hardware implementation, the division between functional modules/units mentioned in the above description does not necessarily correspond to the division of physical components; for example, a physical component may have multiple functions, or a function or operation may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable, and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or other memory techniques, a compact disc read-only memory (CD-ROM), a digital versatile disk (DVD) or other optical disk storage, a magnetic cassette, a magnetic tape, magnetic disk storage or other magnetic storage devices, or any other medium that can be used to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

Terms such as "component," "module," and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As illustrated by using figures, both a computing device and an application that runs on a computing device may be components. One or more components may reside within a process or a thread of execution, and a component may be located on one computer or distributed between two or more computers. In addition, these components may be executed by various computer-readable media that store various data structures. For example, the components may communicate by using a local or remote process and based on a signal having one or more data packets (for example, data from two components interacting with another component in a local system, a distributed system, or across a network such as Internet interacting with another system by using the signal).

Some embodiments of the present disclosure have been described above with reference to the accompanying drawings and are not to limit the scope of the present disclosure. Any modifications, equivalent substitutions, and improvements made by those of ordinary skill in the art without departing from the scope and essence of the present disclosure shall fall within the scope of the present disclosure.

**Claims**

1. A method for base station (BS) scheduling, comprising:

   acquiring BS information, wherein the BS information comprises BS location information and BS traffic information; and
   generating a scheduling instruction according to the BS information for migrating a BS from a first area to a second area.

2. The method of claim 1, wherein the BS traffic information comprises at least one of:

   a number of users accessing the BS;
   BS uplink and downlink traffic;
   BS traffic history information; or
   BS traffic abnormality information.

3. The method of claim 1, wherein the BS information further comprises: an administrator instruction.

4. The method of claim 1, wherein generating the scheduling instruction according to the BS information comprises:

   obtaining a regional traffic distribution according to the BS information in an area; and
   generating the scheduling instruction according to the regional traffic distribution.

5. The method of claim 2, wherein generating the scheduling instruction according to the BS information comprises:

   obtaining a BS traffic change trend in an area according to the BS traffic history information in the area; and
   generating the scheduling instruction according to the BS location information and the BS traffic change trend.

6. The method of claim 4, wherein generating the scheduling instruction according to the regional traffic distribution comprises:

   obtaining a traffic change trend according to history data of the regional traffic distribution, wherein the traffic change trend is predicted according to the history data of the regional traffic distribution; and
   generating the scheduling instruction according to the traffic change trend.

7. The method of claim 4, wherein generating the scheduling instruction according to the regional traffic distribution comprises:

   obtaining the first area and the second area according to the regional traffic distribution; and
   generating the scheduling instruction according to traffic information of the first area and traffic information of the second area.

8. The method of claim 7, wherein:

   the first area comprises a traffic idle area;
   the second area comprises a traffic warning area; and
   the traffic idle area is an area in which a number of users accessing BS in the area is less than a first idle threshold or an area in which BS uplink and downlink traffic in the area is less than a second idle threshold; and
   the traffic warning area is an area in which the number of users accessing BS in the area is greater than a third warning threshold or an area in which the BS uplink and downlink traffic in the area is greater than a fourth warning threshold.

9. The method of claim 7, wherein generating the scheduling instruction according to the traffic information of the first area and the traffic information of the second area comprises:

   obtaining first scheduling information according to the traffic information of the first area, and obtaining second scheduling information according to the traffic information of the second area; and
   generating the scheduling instruction according to the first scheduling information and the second scheduling information.

10. The method of claim 9, wherein:

the first scheduling information comprises at least one of:

quantity information of at least one idle BS;
location information of the at least one idle BS; or
idle time information of the at least one idle BS; and

the second scheduling information comprises at least one of:

quantity information of at least one immigrating BS;
location information of the at least one immigrating BS; or
time information of the at least one immigrating BS.

11. The method of claim 7, wherein generating the scheduling instruction according to traffic information of the first area and traffic information of the second area comprises:

obtaining BS scheduling matching information according to the traffic information of the first area and the traffic information of the second area; and
generating the scheduling instruction according to the BS scheduling matching information.

12. The method of claim 1, further comprising:
obtaining route information, wherein the route information comprises at least one of:

building density information;
transportation information; or
weather information.

13. The method of claim 12, wherein generating the scheduling instruction according to the BS information comprises:

obtaining BS scheduling matching information according to the BS information and the route information; and
generating the scheduling instruction according to the BS scheduling matching information.

14. The method of claims 9 or 13, wherein the first scheduling information further comprises at least one of:

idle level information of idle BS;
predicted traffic information of idle area;
current uplink and downlink traffic of idle BS; or
maximum uplink and downlink traffic of idle BS.

15. The method of claim 1, wherein: the scheduling instruction comprises at least one of:

BS identification information;
a migration time;
a migration route; or
a migration destination.

16. The method of claim 1, wherein the BS comprises a flight module, and the BS migrates by means of the flight module according to the scheduling instruction.

17. A method for base station (BS) scheduling, applied to a BS, the method comprising:

receiving a scheduling instruction, wherein the scheduling instruction is generated according to BS information, and the BS information comprises BS location information and BS traffic information; and
migrating from a first area to a second area according to the scheduling instruction.

18. The method of claim 17, wherein the BS traffic information comprises at least one of:

   a number of users accessing the BS;
   BS uplink and downlink traffic;
   BS traffic history information; or
   BS traffic abnormality information.

19. The method of claim 17, wherein the BS information further comprises: an administrator instruction.

20. The method of claim 17, wherein the scheduling instruction comprises at least one of:

   BS identification information;
   a migration time;
   a migration route; or
   a migration destination.

21. The method of claim 17, after receiving the scheduling instruction, the method further comprising:

   disabling a wireless access service; and
   activating a flight module.

22. The method of claim 17, wherein migrating from the first area to the second area according to the scheduling instruction further comprises:

   sending a migration complete message; and
   enabling a wireless access service.

23. A method for scheduling, comprising:

   sending, by a device for scheduling, a scheduling instruction;
   receiving, by a base station (BS), the scheduling instruction; and
   migrating, by the BS, from a first area to a second area according to the scheduling instruction.

24. The method of claim 23, wherein, before sending, by the device for scheduling, the scheduling instruction, the method comprises:

   acquiring, by the device for scheduling, BS information, wherein the BS information comprises BS location information and BS traffic information; and
   generating, by the device for scheduling, the scheduling instruction according to the BS information.

25. The method of claim 23, wherein, before sending, by the device for scheduling, the scheduling instruction, the method comprises:

   acquiring, by the device for scheduling, an administrator instruction; and
   generating, by the device for scheduling, the scheduling instruction according to the administrator instruction.

26. The method of claim 23, wherein, before sending, by the device for scheduling, the scheduling instruction, the method comprises:
   acquiring, by the device for scheduling, route information, wherein the route information comprises at least one of:

   building density information;
   transportation information; or
   weather information.

27. The method of claim 26, wherein generating the scheduling instruction according to the BS information comprises:

   obtaining BS scheduling matching information according to the BS information and the route information; and
   generating the scheduling instruction according to the BS scheduling matching information.

28. A device for scheduling, comprising:

an acquisition module, configured to acquire base station (BS) information, wherein the BS information comprises BS location information and BS traffic information;
a storage module, configured to store the BS information;
an analysis module, configured to generate a scheduling instruction according to the BS information for instructing a BS to migrate from a first area to a second area; and
a sending module, configured to send the scheduling instruction.

29. A communication base station (BS), comprising:

a receiving module, configured to receive a scheduling instruction for instructing the BS to migrate from a first area to a second area;
a processing module, configured to carry out the scheduling instruction to allow the communication BS to migrate from the first area to the second area; and
a flight module, configured to provide flight power to fly the communication BS to the migration destination.

30. A system for scheduling, comprising the device for scheduling of claim 28 and the communication base station (BS) of claim 29.

31. An apparatus for scheduling, comprising:
a memory, a processor, and a computer program stored in the memory and executable by the processor, wherein:
the computer program, when executed by the processor, causes the processor to carry out the method of any one of claims 1 to 27.

32. A computer-readable storage medium, storing computer-executable instructions which, when executed by a processor of a computer, causes the processor to carry out the method of any one of claims 1 to 27.

FIG. 1

FIG. 2

100

300

S1000: Send a scheduling instruction

S2000: Receive the scheduling instruction

S3000: Migrate

FIG. 3a

100

S4000: Obtain BS information

S5000: Generate a scheduling
instruction according to the BS
information

FIG. 3b

100

S4000: Obtain BS information

S5100: Obtain a regional traffic
distribution according to the BS
information in an area

S5200: Generate a scheduling
instruction according to the regional
traffic distribution

FIG. 3c

100

S4000: Obtain BS
information

S5100: Obtain a regional traffic
distribution according to the BS
information in an area

S5210: Obtain a trend of traffic
change according to history data of
the regional traffic distribution

S5220: Generate a scheduling
instruction according to the trend
of traffic change

FIG. 3d

100

S4000: Obtain BS information

S5100: Obtain a regional traffic distribution according to the BS information in an area

S5230: Obtain a first area and a second area according to the regional traffic distribution

S5240: Generate a scheduling instruction according to traffic information of the first area and traffic information of the second area

FIG. 3e

FIG. 3f

EP 4 510 745 A1

~ 100

S4000: Obtain BS information

S5100: Obtain a regional traffic distribution according to the BS information in an area

S5230: Obtain a first area and a second area according to the regional traffic distribution

S5243: Obtain BS scheduling matching information according to traffic information of the first area and traffic information of the second area

S5244: Generate a scheduling instruction according to the BS scheduling matching information

FIG. 3g

26

100

S4000: Obtain BS information

S5300: Obtain a trend of BS traffic change in an area according to BS traffic history information in the area

S5400: Generate a scheduling instruction according to BS location information and the trend of BS traffic change

FIG. 3h

Acquire BS location information and BS traffic information — S100

Generate a scheduling instruction according to the BS location information and the BS traffic information — S200

FIG. 4

Obtain a regional traffic distribution according to BS location information and BS traffic information — S210

Generate a scheduling instruction according to the regional traffic distribution — S220

FIG. 5

S300

Obtain a first area and a second area according to a regional traffic distribution

S400

Generate a BS scheduling instruction according to traffic information of the first area and traffic information of the second area

FIG. 6

S410

Obtain first scheduling information according to traffic information of a first area, and obtain second scheduling information according to traffic information of a second area

S420

Obtain a BS scheduling instruction according to the first scheduling information and the second scheduling information

FIG. 7

FIG. 8

Obtain a BS scheduling scheme according to traffic information of a first area and traffic information of a second area

S430

Optimize the scheduling scheme and obtain an optimized scheduling instruction

S440

FIG. 9

Obtain a scheduling instruction

S500

Migrate to a second area according to the scheduling instruction

S600

FIG. 10

Obtain a scheduling
instruction ⌐ S500

Stop a wireless access
service ⌐ S600

Perform migration
according to the
scheduling instruction ⌐ S600

Send a migration
complete indication ⌐ S610

Enable the wireless
access service ⌐ S620

FIG. 11

Scheduling
apparatus

Receiving
module

400

Storage
module

500

Analysis
module

600

Sending
module

700

FIG. 12

FIG. 13

FIG. 14

FIG. 15

## INTERNATIONAL SEARCH REPORT

| International application No. |
|---|
| **PCT/CN2023/083154** |

### A. CLASSIFICATION OF SUBJECT MATTER

H04W 72/12(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNKI, CNTXT, ENTXT, DWPI, IEEE: 飞行, 会飞, 基站, 空中基站, 空基站, 无人机基站, 接入节点, 中继节点, 回传节点, 小站, 迁移, 迁入, 迁出, 管辖, 覆盖, 接入, 范围, 区域, 地区, 负载, 流量, 位置, 定位, 邻, fly, base station, node, access, migration, cover, area, load, flow, position, location, neighbor

### C. DOCUMENTS CONSIDERED TO BE RELEVANT

| Category* | Citation of document, with indication, where appropriate, of the relevant passages | Relevant to claim No. |
|---|---|---|
| Y | CN 114007225 A (BEIJING SAMSUNG TELECOM R&D CENTER et al.) 01 February 2022 (2022-02-01)<br>description, paragraphs 0013-0017, 0073-0087, and 0260, and figures 5-6 and 22 | 1-32 |
| Y | CN 113347640 A (ZHONG CHUAN) 03 September 2021 (2021-09-03)<br>description, paragraphs 0068-0071, and figure 3 | 1-32 |
| A | CN 110769431 A (CHONGQING YIFEI ZHILIAN TECHNOLOGY CO., LTD.) 07 February 2020 (2020-02-07)<br>entire document | 1-32 |
| A | CN 107852692 A (BAICELLS TECHNOLOGIES CO., LTD.) 27 March 2018 (2018-03-27)<br>entire document | 1-32 |
| A | CN 111491391 A (COMBA TELECOM SYSTEMS (CHINA) CO., LTD.) 04 August 2020 (2020-08-04)<br>entire document | 1-32 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2023** | **28 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/083154** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 110062331 A (SHENYANG WOOZOOM TECHNOLOGY CO., LTD.) 26 July 2019 (2019-07-26)<br>    entire document | 1-32 |
| A | WO 2021011131 A1 (THE BOARD OF REGENTS OF THE UNIVERSITY OF OKLAHOMA) 21 January 2021 (2021-01-21)<br>    entire document | 1-32 |

Form PCT/ISA/210 (second sheet) (July 2022)

**INTERNATIONAL SEARCH REPORT**
Information on patent family members

International application No.

**PCT/CN2023/083154**

| Patent document cited in search report | | | Publication date (day/month/year) | Patent family member(s) | | | Publication date (day/month/year) |
|---|---|---|---|---|---|---|---|
| CN | 114007225 | A | 01 February 2022 | None | | | |
| CN | 113347640 | A | 03 September 2021 | None | | | |
| CN | 110769431 | A | 07 February 2020 | None | | | |
| CN | 107852692 | A | 27 March 2018 | WO | 2017075750 | A1 | 11 May 2017 |
| CN | 111491391 | A | 04 August 2020 | WO | 2021203740 | A1 | 14 October 2021 |
| CN | 110062331 | A | 26 July 2019 | None | | | |
| WO | 2021011131 | A1 | 21 January 2021 | EP | 4000228 | A1 | 25 May 2022 |
| | | | | US | 2022225127 | A1 | 14 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210423128